# EUROPÄISCHE PATENTANMELDUNG

(11) **EP 0 523 011 A1**
(43) Veröffentlichungstag der Anmeldung: **13.01.1993**
(21) Anmeldenummer: 92810697.0
(22) Anmeldetag: 10.09.1992
(51) Int. Cl.: H02B 1/048

(54) **Einbaugehäuse**

(30) Priorität: 11.09.1991 CH 2679/91
(71) Anmelder: WEBER PROTECTION AG, CH-6020 Emmenbrücke (CH)
(72) Erfinder: Flory, Josef, CH-6015 Reussbühl (CH); Ineichen, Kurt, CH-6020 Emmenbrücke (CH)
(74) Vertreter: Lauer, Joachim, Dr.

(57) **Zusammenfassung**

Gegenstand der Erfindung ist ein Einbaugehäuse (32) für den Einbau insbesondere eines Schalters in einer Ausnehmung oder Öffnung. Das Gehäuse (32) weist an zwei gegenüberliegenden Seitenwänden (38, 40) vorzugsweise jeweils zwei Federarme (52, 54; 56) auf, deren untere Enden am Gehäuse befestigt sind und die sich nach oben und von den Seitenwänden fort erstrecken. Des weiteren sind als Stützfedern ausgebildete Stützfederabschnitte (58, 60, 62) vorgesehen, die sich von den oberen Federarmenden jeweils nach unten zu den Seitenwänden hin erstrecken. Diese Stützfedern sind ebenfalls jeweils in Höhe der unteren Federarmenden an den Seitenwänden (38, 40) befestigt. Vorzugsweise sind die oberen Abschnitte (70, 72; 74) der Federarme (52, 54; 56) mit quer verlaufenden Rillen (76, 78) versehen, die bei jedem Federarmpaar jeweils etwa in der Höhe versetzt angeordnet sind.

## Beschreibung

### TECHNISCHER HINTERGRUND

Die Erfindung betrifft ein Einbaugehäuse für den Einbau insbesonderere eines Schalters in einer Ausnehmung oder einer Öffnung, wobei das Gehäuse an zwei gegenüberliegenden Seitenwänden Federarme, deren untere Enden in einem unteren Gehäusebereich angeordnet sind und die sich nach oben und von den Gehäusewänden fort erstrecken, sowie Stützfederabschnitte aufweist, die sich von den oberen Federarmenden jeweils nach unten und zu den Seitenwänden hin erstrecken.

### STAND DER TECHNIK

Insbesondere bei elektrischen Schalttafeln werden quaderförmige Gehäuse für elektrische Geräte sowie insbesondere Schalter eingebaut. Zu diesem Zweck werden sie von der Vorderseite her in die betreffende Ausnehmung oder Offnung eingesetzt. Zur Fixierung des Gehäuses im eingebauten Zustand sind bei einem aus der DE-GM 88 02 459.8 und in Fig. 1 dargestellten bekannten Gehäuse 2 an zwei gegenüberliegenden Seitenwänden 16 Federarme in Form von Spreizlaschen 4 vorgesehen, die in einem unteren Gehäusebereich am Gehause 2 angeformt sind und sich von den Seitenwänden 16 in einem spitzen Winkel 6 fort nach oben erstrecken. Von den oberen Enden der Spreizlaschen 4 erstrecken sich nach unten und zu den Seitenwänden 16 hin angeformte Stützstreben 12, d. h. Stützfederabschnitte. Die oberen Federarmenden 8 verlaufen im wesentlichen parallel zur Einsetzrichtung und weisen auf der Aussenseite ein Zahnrast- bzw. Rillenprofil 10 auf. Auf der Oberseite weist das Gehäuse 2 eine Aufnahmeöffnung 18 beispielsweise für ein Bedienelement eines Schalters o. dgl. auf. Auf der Oberseite ist eine die Aufnahmeöffnung 18 umgrenzende Deckplatte 20 vorgesehen, die seitlich über den eigentlichen Gehäusekörper hinausragt und Anlageflächen 22 bildet. An den anderen beiden Seitenwänden 24 weist das Gehäuse 2 eine Anzahl von Durchbrechungen für Montagezwecke auf.

Beim Einsetzen des Gehäuses 2 in Richtung des Pfeils 26 in eine Montageöffnung werden die Spreizlaschen 4 nach innen, d.h. zu den Seitenwänden 16 hin gebogen, wobei sie eine entsprechende Federkraft auf die mit den Spreizlaschen 4 in Eingriff befindlichen Kanten der Montageöffnung ausüben und auf diese Weise das Gehäuse 2 in der Montageöffnung fixieren. Dabei stützen sich die Stützstreben 12 an den Seitenwänden 16 ab, wobei eine weitere nach aussen gerichtete Kraft auf die betreffenden Kanten der Montageöffnungen ausgeübt wird. Des weiteren greift die Kante der Montageöffnung in das Zahnrastprofil 10 auf der Aussenseite der Spreizlaschen 4 ein, wobei sich eine weitere Sicherung des Gehäuses 2 in der Schalttafel ergibt.

In der Praxis erweist es sich als nachteilig, dass die Stützstreben 12 nicht am Gehäuse 2 anliegen, sondern aus fertigungstechnischen Gründen mit bestand von diesem angeordnet sind. Beim Einschieben des Gehäuses 2 ergibt sich auf diese Weise mit dem Drücken der Spreizlaschen 4 in Richtung der Seitenwände 16 zunächst ein Leerweg, bis die Stützstreben 12 zur Anlage an der Seitenwand 16 gelangen. Der Leerweg entspricht dabei dem bestand des unteren Endes der Stützstreben 12 von der Seitenwand 24 des Gehäuses 2. Erst nach Zurücklegen des Leerweges tritt die Federwirkung durch die Stützstreben ein. Infolgedessen wird die Weg/Kraft-Kennlinie, d.h. die Gesamtcharakteristik dieser Federanordnung, ungünstig. Ungünstig ist auch, daß die die Federkraft verursachende Deformationsspannung im wesentlichen in dem kleinen Ubergangsbereich zwischen den Federarmen und den Stützstreben lokalisiert ist, wodurch dieser Bereich stark belastet wird.

### AUFGABE DER ERFINDUNG

Der Erfindung liegt die Aufgabe zugrunde, ein Einbaugehäuse zu schaffen, das günstige Einbaueigenschaften aufweist.

Diese Aufgabe ist bei einem Einbaugehäuse mit den Merkmalen des Anspruchs 1 gelöst. Vorteilhafte Weiterbildungen des erfindungsgemässen Einbaugehäuses sind Gegenstand der Unteransprüche.

### DARSTELLUNG DER ERFINDUNG

Ein erfindungsgemässes Einbaugehäuse für den Einbau insbesondere eines Schalters in einer Ausnehmung oder einer Öffnung weist somit an zwei gegenüberliegenden Seitenwänden Federarme, deren untere Enden am Gehäuse befestigt sind und die sich nach oben und von den Seitenwänden fort erstrecken, sowie Stützfederabschnitte auf, die sich von den oberen Federarmenden jeweils nach unten und zu den Seitenwänden hin erstrecken. Die Stützfederabschnitte sind als Stützfedern ausgebildet und jeweils etwa in Höhe der unteren Federärmenden an den Seitenwänden befestigt.

Durch die erfindungsgemässe Ausgestaltung der Federkonstruktion ergibt sich eine ganz andere Charakteristik. Die Federarme und die Stützfedern sind jeweils etwa gleich lang und im Bereich der unteren Enden am Gehäuse befestigt bzw. angeformt. Auf diese Weise ergibt sich beim Einschieben des Gehäuses in eine Ausnehmung oder Öffnung mit dem Andrücken der Federarme kein Leerweg, d.h. beide Federelemente, die Federarme und die Stützfedern, legen etwa gleich lange Wege zurück und wirken stets gleichzeitig. Auf diese Weise ergibt sich eine glatte Federcharakteristik, und die Materialbeanspruchung bei der Montage ist entsprechend geringer.

Eine besonders günstige Ausgestaltung dieser Federkonstruktion ergibt sich, wenn die Stützfedern einstückig mit den Federarmen ausgebildet sind und im wesentlichen parallel zu diesen verlaufen. Auf diese Weise werden beide Federelemente, die Federarme und die Stützfedern, etwa gleich und darüber hinaus über ihre Länge verteilt relativ gleichmäßig belastet und die Bruchgefahr ist ausserordentlich gering.

Vorteilhaft weisen die Federarme einen in die Senkrechte oder zur Seitenwand hin in einem stumpfen Winkel abgebogenen oberen Abschnitt auf und die Stützfedern sind zur Seitenwand des Gehäuses konkav ausgebildet. Durch die Umbiegung der Federarme einwärts zum Gehäuse hin ergibt sich am Ende der Einsetzbewegung eine Entlastung der Federarme, was eine Verrastung mittels entsprechender Rastelemente am oberen Abschnitt der Federarme mit der Kante der Einsetzöffnung ermöglicht.

Vorteilhaft sind jeweils zwei Federarme an den Seitenwänden des Gehäuses vorgesehen. Dies ermöglicht es, eventuelle Ungenauigkeiten oder Masstoleranzen der Ausnehmung oder Öffnung auszugleichen, in die das Gehäuse eingesetzt wird.

Eine besonders gute Fixierung des Gehäuses ergibt sich, wenn die Federarme auf der Aussenseite ihres oberen Abschnittes quer verlaufende Rillen aufweisen. Zwischen diesen Rillen rastet das Gehäuse beim Einsetzen an der Kante der Einsetzöffnung ein, wodurch das Gehäuse weiter fixiert wird.

Zweckmässig sind die Rillen bei paarweiser Anordnung der Federarme die Rillen der beiden benachbarten Federarme jeweils in der Höhe versetzt angeordnet. Auf der gegenüberliegenden Seite des Gehäuses ist die Anordnung entsprechend, jedoch spiegelsymmetrisch, so dass sich eine diagonale Unsymmetrie ergibt. Durch den höhenmässigen Versatz der Rillen kann ein Wackeln des eingesetzten Gehäuses verhindert werden, das sich sonst bei zu grober Rasterung, d. h. zu großem Rillenabstand, ergeben könnte. Es wird auch die Gefahr eines Bruchs verhindert, die bei einer zu feinen Rasterung auftreten könnte.

### BESCHREIBUNG DER ERFINDUNG

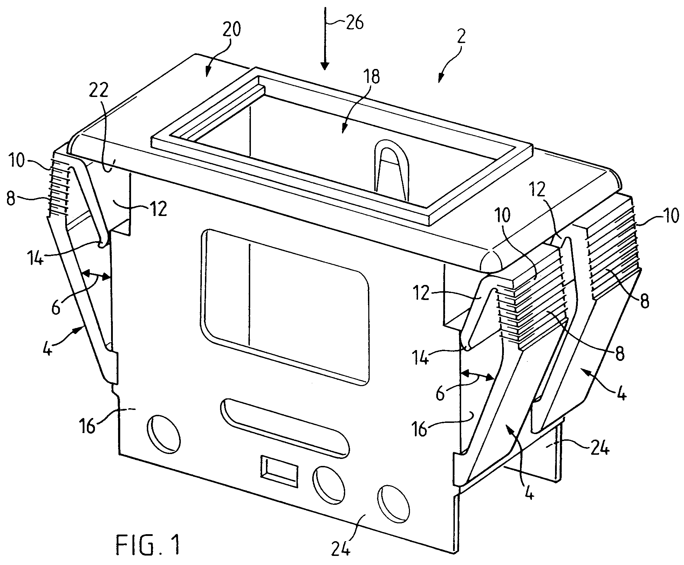

In der Zeichnung zeigen
Fig. 1 ein Beispiel eines bekannten Einbaugehäuses in perspektivischer Darstellung,
Fig. 2 eine perspektivische Ansicht eines erfindungsgemässen Einbaugehäuses und
Fig. 3 eine Seitenansicht des Einbaugehäuses von Fig. 2, die die Rillenanordnung der Federarme veranschaulicht.

### WEG DER AUSFÜHRUNG DER ERFINDUNG

Die Erfindung wird im folgenden anhand eines bevorzugten Ausführungsbeispiels und der Zeichnung beschrieben.

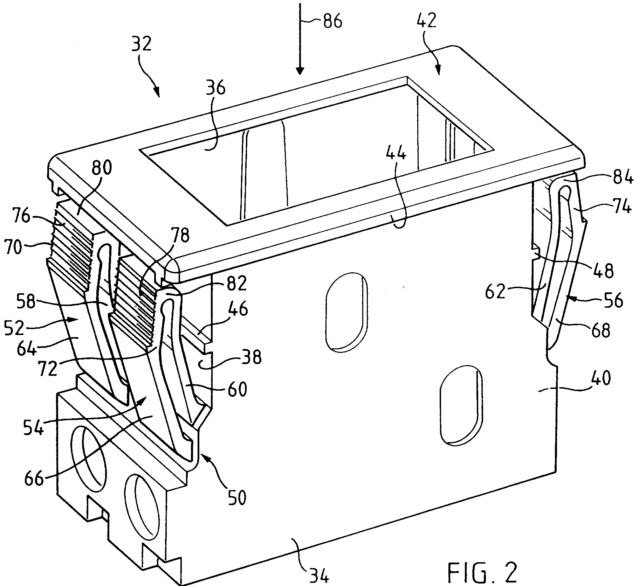

Es wird zuerst auf Fig. 2 Bezug genommen. Ein Gehäuse 32 ist im wesentlichen quaderförmig ausgebildet mit zwei langen und zwei kurzen Seitenwänden 34, 36 bzw. 38, 40. Auf der Oberseite weist das Gehäuse 32 eine Deckplatte 42 mit Anlageflächen 44 auf. In den Seitenwänden des Gehäuses 32 sind für den Einbau diverser Gehäuselemente und elektrischer Anschlüsse diverse Durchbrechungen vorgesehen. Die schmalen Seitenwände 38, 40 weisen jeweils eine quer verlaufende angeformte Anschlagleiste 46, 48 auf. Im unteren, etwas vorspringenden Gehäusebereich 50 der schmalen Seitenwände 38, 40 sind jeweils die unteren Enden von Federarmen 52, 54, 56 angeordnet. Der zweite Federarm an der Seitenwand 40 ist nicht zu sehen. Gegenüberliegend den unteren Federarmenden und etwas mehr zum Gehäuseinneren hin sind die unteren Enden von Stützfedern 58, 60, 62 am Gehäuse angeformt. Die Federarme 52, 54, 56 und die Stützfedern 58, 60, 62 sind einstückig zu einer geschlossenen ovalen Schleife geformt, die somit zwei benachbarte, gegeneinander abgestützte Federn umfasst.

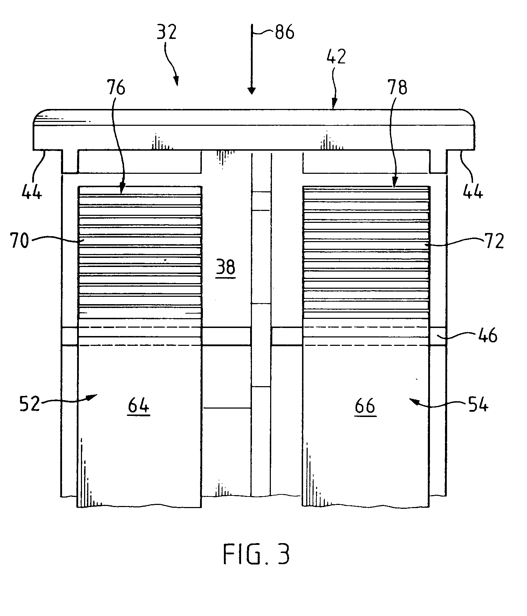

Die Federarme 52, 54, 56 umfassen jeweils einen unteren Abschnitt 64, 66, 68, der sich vom Gehäusebereich 50 nach oben und von den Seitenwänden 38 bzw. 40 nach aussen erstreckt, sowie einen oberen Abschnitt 70, 72, 74, der im Fall des dargestellten Ausführungsbeispiels in bezug auf den unteren Abschnitt geringfügig nach innen abgewinkelt ist und sich ebenfalls nach oben erstreckt. Die oberen Abschnitte 70, 72, 74 sind jeweils mit quer verlaufenden Rillen 76, 78 versehen, wobei die Rillen des oberen Abschnittes 74 in Fig. 2 nicht zu sehen sind. Die Anordnung der Rillen 76, 78 ist aus der Seitenansicht von Fig. 3 näher ersichtlich. Die Rillen 76 des in Fig. 3 links dargestellten Federarms 52 sind bezüglich der Rillen 78 des rechten Federarms 54 bei gleicher Rillenbreite in bezug auf die Vertikale versetzt.

Die Stützfedern 58, 60, 62 sind über einen abgerundeten Verbindungsabschnitt 80, 82, 84 mit den Federarmen 52, 54, 56 verbunden und in bezug auf die Seitenwände 38, 40 schwach konkav ausgebildet, wobei der untere Abschnitt im wesentlichen gerade ausgebildet ist. Auf diese Weise verlaufen die Stützfedern 58, 60, 62 im wesentlichen parallel zu den Federarmen 52, 54, 56.

Die Montage des erfindungsgemässen Einbaugehäuses 32 in einer Öffnung erfolgt auf folgende Weise. Das Gehäuse 32 wird in Richtung des Pfeils 86 in die für die Montage vorgesehene Öffnung eingeschoben. Hierbei gelangt zunächst jeweils der untere Abschnitt 64, 66, 68 der Federarme 52, 54, 56 mit der Kante der Montageöffnung in Eingriff. Mit dem Einschieben werden die Federarme 52, 54, 56 nach innen, d.h. in Richtung der Seitenwände 38, 40 gedrückt. Dabei wirkt die Federkraft der Stützfedern 58, 60, 62 der Druckkraft auf die Federarme 52, 54, 56 entgegen. Der Winkel und die Länge der unteren Abschnitte 64, 66, 68 der Federarme sind dabei so bemessen, dass die Federarme 52, 54, 56 deformiert sind, wenn das Gehäuse 32 über das obere Ende der unteren Abschnitte 64, 66, 68 hinaus verschoben wird. Ab diesem Zeitpunkt erfolgt eine Entlastung der Federarme 52, 54, 56, wobei zugleich mit fortschreitender Einschiebebewegung die Rillen 76, 78 nacheinander mit der Kante der Einbauöffnung in Eingriff treten. Der Einbau des Gehäuses 32 ist beendet, wenn die Anschlagflächen 44 beispielsweise mit der Platte der entsprechenden Schalttafeln zur Auflage gelangen. Gleichzeitig ist das Gehäuse mit der Kante der Montageöffnung mittels der Rillen 76, 78 verrastet.

Infolge der höhenmässig versetzten Anordnung der Rillen 76, 78 können beispielsweise Unebenheiten oder Toleranzen der Plattendicke etc. ausgeglichen werden, ohne dass eine zu feine und beschädigungsanfällige Rillenanordnung gewählt werden muss.

## Patentansprüche

1. Einbaugehäuse (32) für den Einbau insbesondere eines Schalters in einer Ausnehmung oder einer Öffnung, wobei das Gehäuse (32) an zwei gegenüberliegenden Seitenwänden (38, 40) Federarme (52, 54; 56), deren untere Enden am Gehäuse befestigt sind und die sich nach oben und von den Seitenwänden (38; 40) fort erstrecken, sowie Stützfederabschnitte (58, 60; 62) aufweist, die sich von den oberen Federarmenden jeweils nach unten und zu den Seitenwänden (38; 40) hin erstrecken, dadurch **gekennzeichnet,** dass die Stützfederabschnitte als Stützfedern (58, 60; 62) ausgebildet sind und jeweils etwa in Höhe der unteren Federarmenden an den Seitenwänden (38; 40) ebenfalls befestigt sind.

2. Gehäuse nach Anspruch 1, dadurch **gekennzeichnet,** dass die Stützfedern (58, 60; 62) einstückig mit den Federarmen (52, 54; 56) ausgebildet sind und im wesentlichen parallel zu diesen verlaufen.

3. Gehäuse nach Anspruch 1 oder 2, dadurch **gekennzeichnet**, dass die Federarme (52, 54; 56) einen in die Senkrechte oder zur Seitenwand hin in einem stumpfen Winkel abgebogenen oberen Abschnitt (70, 72; 74) aufweisen und die Stützfedern (58, 60; 62) zur Seitenwand (38, 40) des Gehäuses (32) konkav ausgebildet sind.

4. Gehäuse nach einem der Ansprüche 1 bis 3, dadurch **gekennzeichnet,** dass jeweils zwei Federarme (52, 54; 56) an den Seitenwänden (38; 40) des Gehäuses (32) vorgesehen sind.

5. Gehäuse nach einem der Ansprüche 1 bis 4, dadurch **gekennzeichnet,** dass die Federarme (52, 54) auf der Aussenseite ihres oberen Abschnitts quer verlaufende Rillen (76, 78) aufweisen.

6. Gehäuse nach Anspruch 4 und 5, dadurch **gekennzeichnet,** dass die Rillen (76, 78) der beiden benachbarten Federarme (52, 54) jeweils in der Höhe versetzt angeordnet sind.
